# EUROPEAN PATENT SPECIFICATION

(11) **EP 4 040 671 B1**
(45) Date of publication and mention of the grant of the patent: **02.09.2026**
(21) Application number: 20873195.0
(22) Date of filing: 18.09.2020
(51) Int. Cl.: H02P 25/22, H02P 27/06, H02M 7/48, H02M 1/32, H02M 7/5387, H02P 29/028

(54) **MOTOR DRIVE DEVICE**
MOTORANTRIEBSVORRICHTUNG
DISPOSITIF D'ENTRAÎNEMENT DE MOTEUR

(30) Priority: 04.10.2019 JP 2019183865
(43) Date of publication of application: 10.08.2022
(73) Proprietor: Astemo, Ltd., Tokyo 100-0004 (JP)
(72) Inventor: YANO, Tomohiko, Tokyo 100-8280 (JP)
(74) Representative: Mewburn Ellis LLP
(86) International application number: PCT/JP2020/035553
(87) International publication number: WO 2021/065581

(56) References cited:
- EP-A1- 3 029 822
- FR-A1- 2 936 380
- JP-A- 2007 295 658
- JP-A- 2013 141 335
- JP-A- 2013 529 055
- JP-A- 2015 033 212
- JP-A- 2018 014 829
- JP-A- 2018 014 829
- JP-A- H10 181 617

## Description

### Technical Field

The present invention relates to a motor drive device that drives a motor.

### Background Art

In recent years, automatic driving of automobiles has been advanced with the benefit of development of machine training technology. In the case of a self-driving vehicle, it is assumed that the driver is absent or cannot drive a car. In such a situation, it is not possible to rely on the force of a human turning the steering wheel for steering of the vehicle, and the electric power steering device is responsible for all the steering forces. When the electric power steering device loses the steering force due to a failure, the vehicle cannot be steered. Therefore, the electric power steering device is required to have a fail-operational configuration in which the steering force is not lost even when a failure occurs. Similarly, a motor and an inverter that are responsible for a forward driving force of a vehicle of an electric vehicle is also required to maintain a driving force enough to move a vehicle on which a human rides at the time of failure to at least a safe shoulder, and a fail-operational configuration is required.

In order to satisfy the fail-operational requirement as described above, a motor drive device is studied in which an inverter that drives a motor of a plurality of phases having a plurality of coils can continuously drive the motor even when a failure occurs in any phase.

PTL 1 discloses that "a motor in which coils of a plurality of phases of five or more phases are connected by star connection, an inverter that is connected to one end of each phase coil, converts DC power into AC power, and supplies the AC power to each phase of the motor, a power relay that is disposed on the other end side of each phase coil, and is configured to be able to cut off power supplied to coils of one or more phases among the coils of the plurality of phases of the motor by using a plurality of contacts inserted between the coils star-connected, and a control unit that controls driving of the motor by generating a control signal of the inverter are provided, and when one or more phases of the motor fail, the control unit opens the contact of the power relay corresponding to the failed phase, and drives three or more phases at substantially the same interval among the plurality of remaining phases". This configuration allows the motor to be continuously driven even when any phase of the motor fails.

PTL 2 proposes an electric actuator comprising a polyphase machine, at least one connection member for supplying this actuator via at least one network delivering an alternating current, a first and a second bus mounted in parallel between each connection member and the machine to control it in frequency, and controlled connection and disconnection means interposed between each bus and each connection member.

PTL 3 proposes a power conversion device including switches that are provided on at least one of a high potential side connection line and low potential side connection line and are capable of connecting/disconnecting a first inverter side to/from a second inverter side. EP 3 029 822 A1 discloses a single MOSFET disposed after each of the pieces of phase output on the side of the ground of the junction, disposing the only one MOSFET as being able to interrupt the current path leading to the ground.

### Citation List

### Patent Literature

PTL 1: WO 2011/089656
PTL 2: FR2936380A1
PTL 3: JP2018014829A

### Summary of Invention

### Technical Problem

In the motor drive device described in PTL 1, a power relay is used to separate a failed phase from other normal phases. However, in a case where each relay is configured by a semiconductor relay including a metal-oxide-semiconductor field-effect transistor (MOSFET), MOSFETs in two series are required in order to prevent conduction due to a parasitic diode. Therefore, in the motor drive device described in PTL 1, the number of MOSFETs connected in series via the current path from the power supply to the ground increases, and the on-resistance increases accordingly, and the power loss may increase.

An object of the present invention is to provide a motor drive device capable of not only continuing an operation by remaining phases when a certain phase among a plurality of phases fails, but also performing a highly efficient operation with a small power loss even in a normal state.

### Solution to Problem

In a first aspect, there is provided a motor drive device according to claim 1.

### Advantageous Effects of Invention

According to the present invention, it is possible to provide a motor drive device capable of not only continuing an operation by remaining phases when a certain phase among a plurality of phases fails but also performing a highly efficient operation with a small power loss even in a normal state.

### Brief Description of Drawings

[FIG. 1] FIG. 1 is a circuit diagram illustrating a motor drive device and a five-phase motor 1 according to a first embodiment.
[FIG. 2] FIG. 2 is a diagram illustrating an on/off state of each MOSFET in a normal state in the first embodiment.
[FIG. 3] FIG. 3 is a diagram illustrating an on/off state of each MOSFET in a case where an M45, which is one of upper arms of a five-phase inverter, has a short-circuit failure in the first embodiment.
[FIG. 4] FIG. 4 is a diagram illustrating an on/off state of each MOSFET in a case where an M55, which is one of lower arms of a five-phase inverter, has a short-circuit failure in the first embodiment.
[FIG. 5] FIG. 5 is a diagram illustrating an on/off state of each MOSFET in a case where an M35 which is one of the MOSFETs for regenerative current prevention has an open failure in in the first embodiment.
[FIG. 6] FIG. 6 is a diagram illustrating an on/off state of each MOSFET in a case where W5, which is one of the coils of the five-phase motor 1, has a ground fault in the wiring on the neutral point side in the first embodiment.
[FIG. 7] FIG. 7 is a diagram illustrating an on/off state of each MOSFET when W5, which is one of the coils of the five-phase motor 1, has a ground fault in the wiring on the inverter side in the first embodiment.
[FIG. 8] FIG. 8 illustrates connection of gate drivers in the first embodiment.
[FIG. 9] FIG. 9 is a circuit diagram illustrating a motor drive device and a five-phase motor 1 according to a second embodiment.
[FIG. 10] FIG. 10 is a diagram illustrating on/off states of each MOSFET in a case where W1, which is one of the coils of the five-phase motor 1, has a ground fault in the wiring on the neutral point side in the second embodiment.

### Description of Embodiments

Hereinafter, embodiments of the present invention will be described with reference to the drawings. Note that the following embodiments are examples for carrying out the present invention, and the present invention is not limited thereto.

### <<First embodiment>>

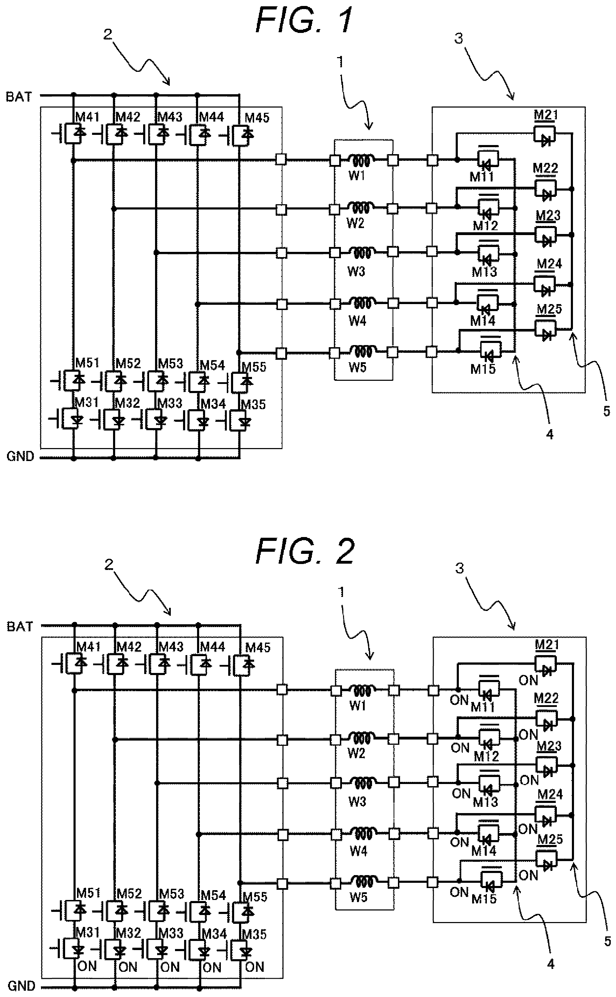

FIG. 1 is a circuit diagram illustrating an example of a motor drive device and a five-phase motor 1 according to the present embodiment. The motor drive device includes a five-phase inverter 2 to which a DC voltage is supplied from a power supply, and a neutral point switching unit 3 that forms a neutral point in advance for each phase of the five-phase motor 1.

First, the five-phase inverter 2 includes a fourth MOSFET group of M41 to M45 and a fifth MOSFET group of M51 to M55. The fourth MOSFET group of M41 to M45 is a semiconductor switching element group that is on the high potential side of the five-phase inverter 2 and constitute the upper arms, and the fifth MOSFET group of M51 to M55 includes semiconductor switching elements that are on the low potential side of the five-phase inverter 2 and constitute the lower arms. The on/off of the switching element group is controlled by a control signal from an inverter control unit (not illustrated).

In addition, a third MOSFET group of M31 to M35 is provided between the five-phase inverter 2 and the ground, and the third MOSFET group of M31 to M35 is connected in series with the respective phase outputs of the fifth MOSFET group of M51 to M55.

Here, the body diodes of the third MOSFET group of M31 to M35 are connected in a direction in which a current flows to the ground. That is, in each of the third MOSFET group of M31 to M35, the body diode is oriented such that the cathode is located on the ground side.

Note that the body diode is assumed to be a parasitic diode inevitably formed due to the structure of the MOSFET, but may be a diode intentionally provided. As will be described later, the third MOSFET group of M31 to M35 plays a role of preventing a regenerative current from flowing through the five-phase motor 1 when a ground fault occurs in the wiring of the five-phase motor 1 on the neutral point switching unit 3 side.

Next, the five-phase motor 1 is a brushless motor including a rotor (not illustrated) and five-phase coils (W1 to W5) wound around a stator. One end of the coil of each phase is connected to the upper arm and the lower arm of each phase of the five-phase inverter 2. The other ends of the coil of respective phases are connected to the first MOSFET group of M11 to M15 and the second MOSFET group of M21 to M25 provided in the neutral point switching unit 3 to be described later.

The neutral point switching unit 3 forms two neutral points in advance for the coil of each phase of the five-phase motor 1 via the first MOSFET group of M11 to M15 and the second MOSFET group of M21 to M25 connected in parallel. Then, when a certain phase of the five-phase inverter 2 fails, the neutral point switching unit 3 appropriately turns on/off each MOSFET group as described later according to a control signal from a neutral point control unit (not illustrated), and interrupts and separates the failed phase from the five-phase motor 1.

The first MOSFET group of M11 to M15 each has one end connected to the five-phase motor 1, and the other end star-connected to each other to form a neutral point 4 which is a first neutral point. The second MOSFET group of M21 to M25 each has one end connected to the five-phase motor 1, and the other end star-connected to each other to form a neutral point 5 which is a second neutral point. Note that neither the neutral point 4 nor the neutral point 5 is connected to the power supply or the ground.

Here, the first MOSFET group of M11 to M15 each has a body diode that is oriented such that the cathode is located toward the coil of the five-phase motor 1. On the other hand, the second MOSFET group of M21 to M25 each has a body diode that is oriented such that the anode is located toward the coil of the five-phase motor 1.

In addition, in the present embodiment, a failure detection unit (not illustrated) for detecting a failure of the five-phase inverter 2 and each MOSFET is provided. As an example of the failure detection unit, it is conceivable to detect a failure of the MOSFET by monitoring a voltage between a drain and a source of the MOSFET and comparing the voltage with a predetermined threshold value. As another example, it is conceivable to detect the current flowing through each phase, detect that the current is excessive or insufficient by comparing the current with a predetermined threshold value, and detect the failure of the wiring and the five-phase motor 1. As the fault detection method, other widely known fault detection methods can be used.

FIG. 2 is a diagram illustrating an on/off state of each MOSFET in a normal state in which no failure occurs. As illustrated in FIG. 2, in a normal state, all of the MOSFETs (the first MOSFET group of M11 to M15 and the second MOSFET group of M21 to M25) in the neutral point switching unit 3 and all of the MOSFETs (the third MOSFET group of M31 to M35) for regenerative current prevention are turned on, and the device is operated as a five-phase inverter and a motor that are star-connected at the neutral point 4 and the neutral point 5.

Next, the operation of each MOSFET when a failure occurs will be described for each type of failure.

First, the operation of each MOSFET when the inverter fails will be described for each type of failure. Here, the failure of the MOSFET of the inverter is roughly divided into a "short-circuit failure" and an "open failure". The "short-circuit failure" refers to a failure in which the switch is always in a conducting state due to a short circuit between the source and the drain of the MOSFET, and the "open failure" refers to a failure in which the switch is always in a cutoff state due to opening between the source and the drain of the MOSFET.

### <Short-circuit failure in upper arm of inverter>

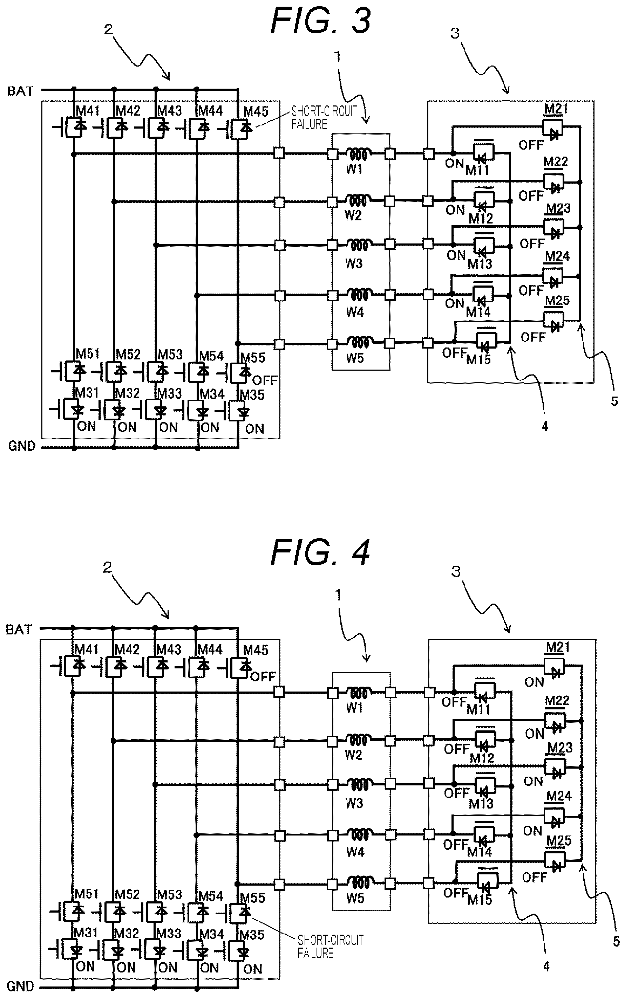

As an example, an operation when the M45, which is one in the fourth MOSFET group constituting the upper arms of the five-phase inverter 2, has a short-circuit failure will be described with reference to FIG. 3. In this case, a battery voltage is continuously applied to the coil W5 connected to the M45, and an excessive DC current that does not contribute to the rotation of the motor continues to flow through the neutral point switching unit 3 to the coil W5 and the other coils W1 to W4, so that the operation of the motor cannot be continued. Therefore, when the short-circuit failure of the M45 is detected, the current flowing through the coil W5 is cut off by the following operation, and the motor operation is continued by the remaining coils W1 to W4.

When the short-circuit failure occurs in the M45, the voltage of the coil W5, connected to the M45, on the neutral point (neutral point switching unit 3) side has a value obtained by superimposing the induced voltage of the motor on the battery voltage. Since this voltage is higher than the neutral point voltage that is 1/2 of the battery voltage, the coil W5 is cut off from the neutral point 4 by turning off the M45 corresponding to the phase of the M15 in which the short-circuit failure has occurred, and the neutral point 4 is protected from overvoltage. Note that M11 to M14 remain in an on state. On the other hand, even when the M25 is turned off, the current flows into the neutral point 5 by the body diode, but the current can be cut off by turning off all the M21 to M25. At this time, in the fifth MOSFET group constituting the lower arms, the M55 in the same phase as the M45 is also turned off. As a result, it is possible to continue the operation of the remaining coils W1 to W4 as a star-connected four-phase motor through the neutral point 4 while cutting off the coil W5 so that an unintended current does not flow.

### <Open failure in upper arm of inverter>

As an example, when the open failure occurs in the M45, the current does not flow in the coil W5, and the operation can be continued as the four-phase motor by the remaining coils W1 to W4 even when each MOSFET of the neutral point switching unit 3 remains ON. At this time, in the fifth MOSFET group constituting the lower arms, the M55 in the same phase as the M45 is turned off.

### <Short-circuit failure of lower arm of inverter>

As an example, an operation when the M55, which is one in the fifth MOSFET group constituting the lower arms of the five-phase inverter 2, has a short-circuit failure will be described with reference to FIG. 4. In this case, the voltage of the coil W5, connected to the M55, on the five-phase inverter 2 side is fixed to the ground. Then, when a neutral point voltage is applied to the coil W5 on the neutral point, an excessive DC current continues to flow through the coil W5. Therefore, at this time, since the voltage of the coil W5 on the neutral point side is lower than the neutral point voltage, the coil W5 is cut off from the neutral point 5 by turning off the M55 corresponding to the phase of the M25 having the short-circuit failure. In this way, the voltage at the neutral point 5 is protected, and an unintended current flowing through the coil W5 is cut off. Note that M21 to M24 remain in an on state. On the other hand, even when the M15 is turned off, the current flows out from the neutral point 4 by the body diode, but the current can be cut off by turning off all the M11 to M15. At this time, in the fourth MOSFET group constituting the upper arms, the M55 in the same phase as the M45 is also turned off. As a result, it is possible to continue the operation of the remaining coils W1 to W4 as a star-connected four-phase motor through the neutral point 5 while cutting off the coil W5 so that an unintended current does not flow.

### <Open failure of lower arm of inverter>

When the open failure occurs in the M55, the current does not flow in the coil W5, and the operation can be continued as the four-phase motor by the remaining coils W1 to W4 even when each MOSFET of the neutral point switching unit 3 remains ON. At this time, in the fourth MOSFET group constituting the upper arms, the M55 in the same phase as the M45 is turned off.

### <Short-circuit failure of MOSFET for regenerative current prevention>

When any in the third MOSFET group (M31 to M35) for regenerative current prevention has a short-circuit failure, the five-phase inverter and the motor operate normally without any problem. However, in a case where a failure such as a ground fault in the wiring on the neutral point switching unit side to be described later, which requires a measure to turn off the third MOSFET group, occurs thereafter, the measure cannot be taken. Therefore, a short-circuit failure of the third MOSFET group should be detected and a warning should be issued to encourage the administrator to repair the short-circuit failure.

### <Open failure of MOSFET for regenerative current prevention>

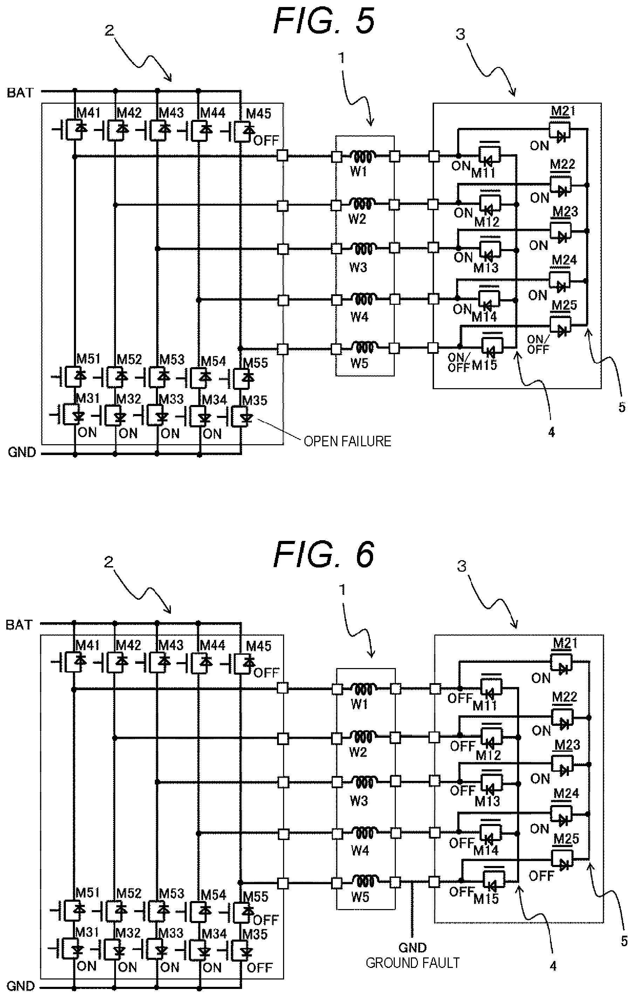

As an example, an operation when an open failure occurs in the M31 in the third MOSFET group (M35 to M35) for regenerative current prevention will be described with reference to FIG. 5.

In this case, the M35, of the upper arm, in the same phase as the M45 is turned off. As a result, the operation is continued as a four-phase motor by the remaining four phases excluding the phase of the M35 in which the open failure has occurred. At this time, among the MOSFETs of the neutral point switching unit 3, the M15 and the M25 corresponding to the phase of the M35 may be turned on or off.

Next, the operation of each MOSFET when the five-phase motor 1 fails will be described. The failure of the five-phase motor 1 is roughly divided into a short-circuit failure and a disconnection failure of each of the coils W1 to W5, and a ground fault in which the wiring is short-circuited to the ground. Regarding the short-to-power fault in which the wiring is short-circuited to the power source, since all the housings of the motor and the inverter have the ground potential in the case of the vehicle, the probability of occurrence of the short-to-power fault is very low as compared with the case of the ground fault, so that it is possible to ignored the fault.

### <Short-circuit failure of coil>

The short-circuit failure of the coil is a short-circuit that occurs in the coil, for example, a flaw or a defect of the coil coating, and the inductance of the coil is significantly reduced or the generated magnetic field is weakened. For the short-circuit failure of each of the coils W1 to W5, by turning off the MOSFETs of the upper arm and the lower arm of the inverter phase connected to the failed coil, the current to the failed coil is cut off, and the operation as the motor can be continued in the remaining four phases. As an example, in a case where a short-circuit failure occurs in the coil W5, the M45 and the M55 are turned off, so that an unintended current can be blocked from flowing through the coil W5.

### <Disconnection failure of coil>

The disconnection failure of the coil occurs when an electric wire constituting the coil is broken due to fatigue caused by burning or mechanical vibration. When a disconnection failure of the coil occurs, a current cannot flow through the coil, and a magnetic force cannot be generated. As an example, when a disconnection failure occurs in the coil W5, the remaining coils W1 to W4 can continue the operation of the motor. It is not necessary to operate the MOSFET of the neutral point switching unit 3 or the MOSFET for regenerative current prevention.

### <Ground fault of wiring on neutral point switching unit side>

As an example, an operation when a ground fault occurs in the wiring of the coil W5, on the neutral point side, which is one of the coils of the five-phase motor 1, will be described with reference to FIG. 6. In this case, since the voltage of the coil W5 on the neutral point side is lower than the neutral point voltage, the coil W5 is cut off from the neutral point 5 and the neutral point 5 is protected from the ground fault by turning off the M25 corresponding to the phase in which the ground fault has occurred. Note that M21 to M24 remain in an on state. On the other hand, since the neutral point 4 is grounded, even when the M15 is turned off, the current flows out from the neutral point 4 by the body diode, but the current can be cut off by turning off all the M11 to M15. At this time, the M45 and the M55 that are MOSFETs of the five-phase inverter 2 connected to the coil W5 are also turned off. As a result, it is possible to continue the operation of the remaining coils W1 to W4 as a star-connected four-phase motor through the neutral point 5 while cutting off the coil W5 so that an unintended current does not flow.

In the third MOSFET group (M31 to M35) for regenerative current prevention, the regenerative current loop of the coil W5 via the body diode of the M55 and the ground is cut off by turning off the M35 in the same phase as W5, and the generation of the brake torque can be prevented.

### <Ground fault on wiring on inverter side>

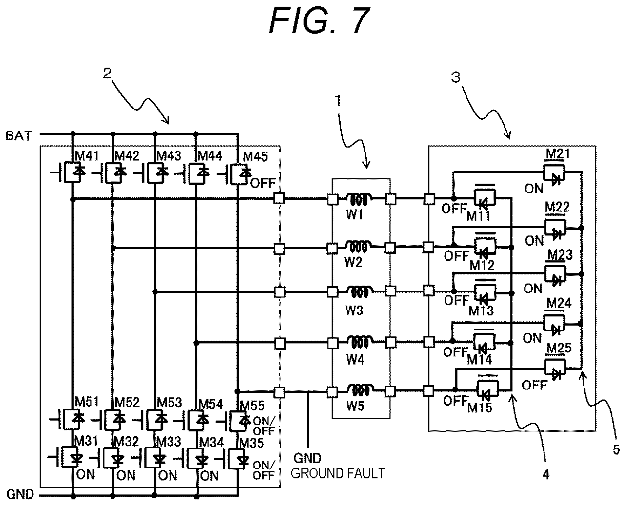

As an example, an operation when a ground fault occurs in the wiring of the coil W5, on the five-phase inverter 2 side, which is one of the coils of the five-phase motor 1, will be described with reference to FIG. 7. Also in this case, since the voltage of the coil W5 on the neutral point side is lower than the neutral point voltage, the coil W5 is cut off from the neutral point 5 by turning off the M25 corresponding to the phase in which the ground fault has occurred. Note that M21 to M24 remain in an on state.

On the other hand, even when the M15 is turned off, the current flows out from the neutral point 4 by the body diode, but the current can be cut off by turning off all of the M11 to M15. At this time, the M45 of the upper arm of the five-phase inverter 2 connected to the coil W5 is also turned off. As a result, it is possible to continue the operation of the remaining coils W1 to W4 as a star-connected four-phase motor through the neutral point 5 while cutting off the coil W5 so that an unintended current does not flow. Note that the M25 of the lower arm and the M35 for regenerative current prevention may be on or off.

Finally, the operation of each MOSFET when the neutral point switching unit 3 fails will be described. The failure of the MOSFET constituting the neutral point switching unit 3 is roughly divided into a short-circuit failure and an open failure. As described above, since all of the first MOSFET group of M11 to M15 and the second MOSFET group of M21 to M25 are turned on in the normal state, there is no problem in continuing the operation of the motor even when a short-circuit failure occurs in any one of the MOSFETs. Even when an open failure occurs in any one of the MOSFETs, the neutral point switching unit 3 has the two neutral points 4 and 5 in parallel in advance, so that the star connection of the motor does not collapse due to the open failure, and the operation of the motor can be continued.

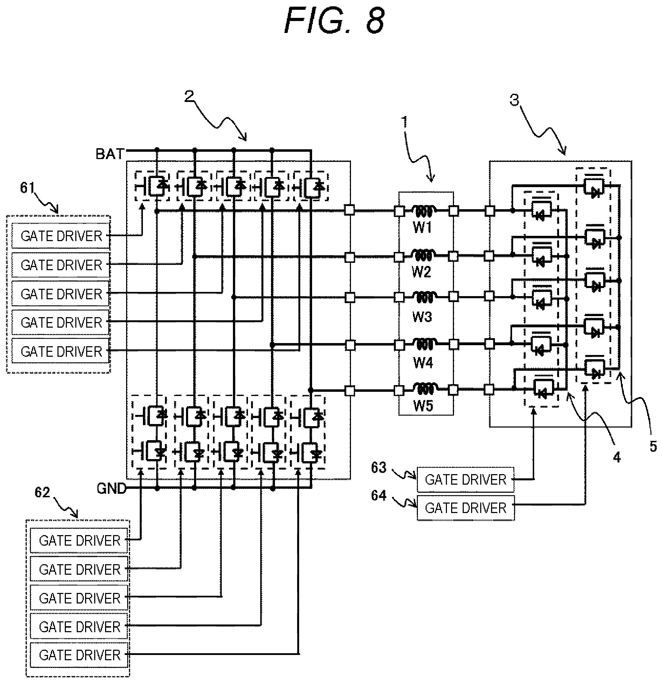

FIG. 8 illustrates a connection example of a gate driver not illustrated in FIGS. 1 to 7. The failure of the gate driver may cause the on and off states of the MOSFET driven by the gate driver to be unintentional. Therefore, it should be avoided that the plurality of MOSFETs that affect the operation continuation of the motor when the combination of the states is not determined should not be connected to the same gate driver.

Examples of such a combination of MOSFETs include a MOSFET of an upper arm and a MOSFET of a lower arm of an inverter. However, when the gate driver has a safety mechanism that reliably turns on or off the state of the MOSFET at the time of failure of the gate driver, and it is ensured that the safety mechanism functions with a sufficient probability, it is possible to connect a plurality of MOSFETs limited in combination of states to the same gate driver. Here, the connection configuration of the gate driver will be described assuming that the gate driver does not have such a safety mechanism.

First, the gate drivers are divided into a gate driver group 61 and a gate driver group 62 by the upper arm and the lower arm of the inverter. This is to prevent simultaneous turning on of the upper and lower arms that causes the through current from a failure of the gate driver. The third MOSFET group for regenerative current prevention is the same gate driver as the MOSFET group of the lower arm, and there is no problem. This is because even when the third MOSFET for regenerative current prevention is fixed in the off state, when the upper arm of the corresponding phase is turned off, the motor drive in the remaining four phases is not affected even if the state of the MOSFET of the lower arm is turned on or off. In the MOSFETs of the neutral point switching unit 3, the gate drivers are desirably divided into gate drivers 63 and 64 in the first MOSFET group of M11 to M15 and the second MOSFET group of M21 to M25. If the first MOSFET group and the second MOSFET group are simultaneously turned off, both the neutral point 4 and the neutral point 5 are disconnected from the five-phase motor, so that the star connection is not secured, and the motor cannot be driven. By dividing the gate driver into the gate drivers 63 and 64, it is possible to ensure that any of the neutral points 4 and 5 always functions even when the gate driver fails.

Here, a case where the above-described motor drive device is applied to an electric power steering device will be described. The electric power steering device includes a steering wheel, a rotation shaft attached to the steering wheel, a torque sensor attached to the rotation shaft, a steering mechanism, a microprocessor, and a five-phase motor, in addition to the motor drive device described above. The steering mechanism is steered by the rotation shaft to control the direction of the wheels. Steering force of the steering mechanism or the rotation shaft is assisted by a five-phase motor. The microprocessor serving as the inverter control unit controls the fourth MOSFET group of M41 to M45 and the fifth MOSFET group of M51 to M55 based on the output of the torque sensor. The five-phase motor is driven by a five-phase inverter including these switching elements. When a failure occurs in a certain phase, the predetermined MOSFET is turned off to cut off and separate the phase, and the operation of the five-phase motor is continued in the remaining four phases. As a result, as the electric power steering device, it is possible to ensure safety without hindering an operation on the motor by human power applied to the steering wheel, that is, an operation on the rotation shaft and the steering mechanism.

In the present embodiment, the case where the motor drive device is applied to the electric power steering device is described, but the present invention can also be applied to other devices such as a main motor of an electric vehicle.

Next, effects of the present embodiment will be described.

When the neutral point switching unit is constituted by a semiconductor relay as in the related art, two series MOSFETs are required for each semiconductor relay in order to prevent conduction due to a parasitic diode. Therefore, in the conventional motor drive device, the number of MOSFETs through which the current passes from the power supply to the ground is six in total.

On the other hand, as in the present embodiment, two neutral points are formed in parallel to divide the current into two, and a MOSFET is provided between each neutral point and the coil to form two MOSFETs in series, so that the number of the MOSFETs is equivalent to one in the neutral point switching unit. Therefore, in the motor drive device of the present embodiment, the number of MOSFETs through which the current passes from the power supply to the ground is four in total. Therefore, the total on-resistance of the MOSFETs when the motor is normally driven is reduced, and a highly efficient motor drive device with a small power loss can be realized.

In addition, even when one phase of the five phases has some kind of failure, the one phase can be cut off and separated from the five-phase motor to continue the operation of the motor, and the motor can be operated using all the remaining four phases, so that the reduction of the torque at the time of failure can be suppressed.

Furthermore, since the MOSFET for regenerative current prevention is provided, even when a ground fault occurs in the wiring on the neutral point switching unit side, the regenerative current loop is blocked, and it is possible to prevent the motor from becoming difficult to control due to the brake torque.

### <<Second embodiment>>

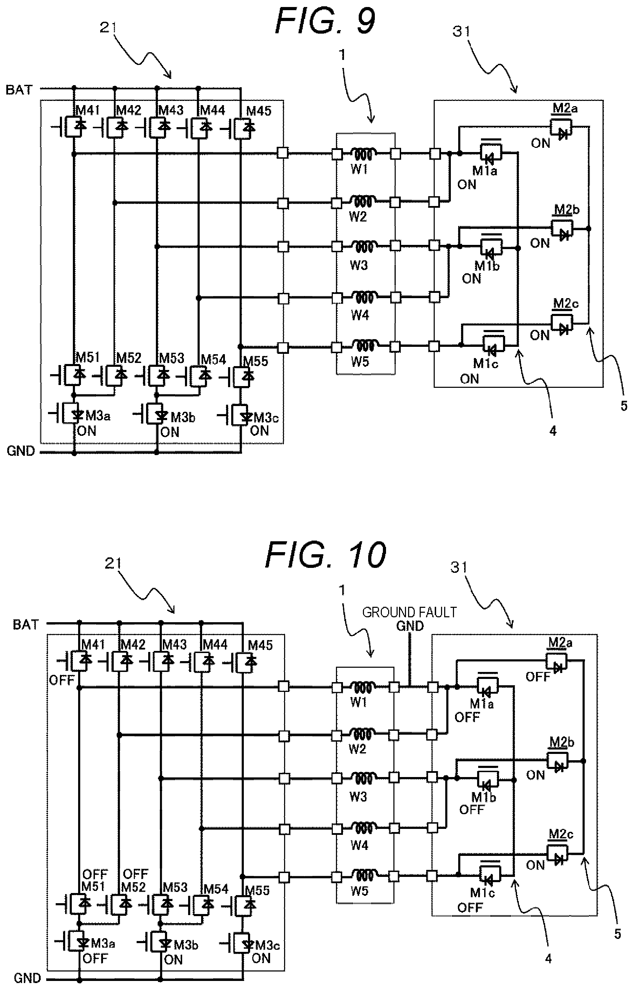

FIG. 9 is a circuit diagram illustrating an example of the motor drive device and the five-phase motor 1 according to the present embodiment. A neutral point switching unit 31 of the present embodiment is the same as that of the first embodiment in that two neutral points are connected in parallel to the five-phase motor 1, but is different from that of the first embodiment 1 in that the three MOSFETs are connected in two phases-two phases-one phase for each neutral point.

With reference to FIG. 10, the operation of each MOSFET will be described with respect to an example in which the ground fault occurs in the wiring of the coil W1, on the neutral point switching unit 31 side, which is one of the coils of the five-phase motor 1 in the present embodiment. In this case, since the voltage of the coil W1 on the neutral point side is lower than the neutral point voltage, the coil W1 is cut off from the neutral point 5 and the neutral point 5 is protected from the ground fault by turning off the M2a, which is one in the second MOSFET group. On the other hand, since the neutral point 4 is grounded, even when the M1a, which is one in the first MOSFET group, is turned off, a current flows out from the neutral point 4 by the body diode, but the current can be cut off by turning off all of the M1a to M1c. At this time, the M41 of the upper arm and the M51 of the lower arm in the five-phase inverter 21 connected to the coil W1 are also turned off. As a result, it is possible to continue the operation as a three-phase motor by the coils W3 to W5 through the neutral point 5 while cutting off the coil W1 so that an unintended current does not flow. In the MOSFET group (M3a to M3c) for regenerative current prevention, the regenerative current loop of the coil W1 via the body diode of the M51 and the ground is cut off by turning off the M3a in the same phase as W1, and the generation of the brake torque can be prevented.

In the present embodiment, when one of the five phases fails, the operation can be continued as a three-phase motor using three of the remaining four phases. The present embodiment has an advantage that the total number of MOSFETs can be suppressed although the reduction of the torque is increased as compared with that of the first embodiment in which the operation can be continued as a four-phase motor even when one phase fails.

### Reference Signs List

1 five-phase motor
2, 21 five-phase inverter
3, 31 neutral point switching unit
4 (first) neutral point
5 (second) neutral point
61, 62 gate driver group
63, 64 gate driver
M11 to M12 first MOSFET group (upper arm of five-phase inverter)
M21 to M25 second MOSFET group (lower arm of five-phase inverter)
M33 to M35, M3a to M3c third MOSFET group (for regenerative current prevention)
M41 to M45, M4a to M4c fourth MOSFET group (forming first neutral point)
M51 to M55, M5a to M5c fifth MOSFET group (forming second neutral point)
W1 to W5 coil

## Claims

1. A motor drive device for driving a plurality of coils (W1, W2, W3, W4, W5) of a motor (1), the motor drive device comprising:
an inverter (2, 21) configured to drive the plurality of coils (W1, W2, W3, W4, W5), the inverter (2, 21) including fourth MOSFETs (M41, M42, M43, M44, M45) on a high potential side of the inverter and fifth MOSFETs (M51, M52, M53, M54, M55) on a low potential side of the inverter (2, 21), the fourth MOSFETs (M41, M42, M43, M44, M45) and the fifth MOSFETs (M51, M52, M53, M54, M55) driven by respective gate driver groups (61, 62);
a neutral point switching unit (3, 31) comprising a first neutral point (4) and a second neutral point (5) that are different from the inverter (2, 21) and are formed in advance by being connectable in parallel to the plurality of coils (W1, W2, W3, W4, W5);
first MOSFETs (M11, M12, M13, M14, M15, M1a, M1b, M1c) connected between the first neutral point (4) and coils (W1, W2, W3, W4, W5), the first MOSFETs (M11, M12, M13, M14, M15, M1a, M1b, M1c) each having a cathode, of a body diode, on a coil side;
second MOSFETs (M21, M22, M23, M24, M25, M2a, M2b, M2c) connected between the second neutral point (5) and coils (W1, W2, W3, W4, W5), the second MOSFETs (M21, M22, M23, M24, M25, M2a, M2b, M2c) each having an anode, of a body diode, on a coil side; and **characterised by**
third MOSFETs (M31, M32, M33, M34, M35, M3a, M3b, M3c) between the inverter (2, 21) and a ground, the third MOSFETs (M31, M32, M33, M34, M35, M3a, M3b, M3c) each having a cathode, of a body diode, on a ground side connected in series with respective phase outputs of the inverter (2, 21), wherein the fifth MOSFETs (M51, M52, M53, M54, M55) and the third MOSFETs (M31, M32, M33, M34, M35, M3a, M3b, M3c) are driven by the same gate driver group (62).

2. The motor drive device according to claim 1, wherein
when a ground fault occurs in a wiring, of a certain phase of the motor (1), on a neutral point (4, 5) side,
a second MOSFET, of the second MOSFETs (M21, M22, M23, M24, M25, M2a, M2b, M2c), connected to the certain phase is turned off, a third MOSFET, of the third MOSFETs (M31, M32, M33, M34, M35, M3a, M3b, M3c), connected to the certain phase is turned off, and
a first MOSFET, of the first MOSFETs (M11, M12, M13, M14, M15, M1a, M1b, M1c), connected to the certain phase and first MOSFETs, of the first MOSFETs (M11, M12, M13, M14, M15, M1a, M1b, M1c), connected to phases other than the certain phase are turned off.

3. The motor drive device according to claim 1, wherein
when a ground fault occurs in a wiring, of a certain phase of the motor (1), on an inverter (2, 21) side,
a second MOSFET, of the second MOSFETs (M21, M22, M23, M24, M25, M2a, M2b, M2c), connected to the certain phase is turned off, and
a first MOSFET, of the first MOSFETs (M11, M12, M13, M14, M15, M1a, M1b, M1c), connected to the certain phase and first MOSFETs, of the first MOSFETs (M11, M12, M13, M14, M15, M1a, M1b, M1c), connected to phases other than the certain phase are turned off.

4. The motor drive device according to claim 1, wherein
when a short-circuit failure occurs in a certain phase of an upper arm of the inverter (2, 21),
a first MOSFET, of the first MOSFETs (M11, M12, M13, M14, M15, M1a, M1b, M1c), connected to the certain phase is turned off, and
a second MOSFET, of the second MOSFETs (M21, M22, M23, M24, M25, M2a, M2b, M2c), corresponding to the certain phase and second MOSFETs, of the second MOSFETs (M21, M22, M23, M24, M25, M2a, M2b, M2c), corresponding to phases other than the certain phase are turned off.

5. The motor drive device according to claim 1, wherein
when a short-circuit failure occurs in a certain phase of a lower arm of the inverter (2, 21),
a second MOSFET, of the second MOSFETs (M21, M22, M23, M24, M25, M2a, M2b, M2c), connected to the certain phase is turned off, and
a first MOSFET, of the first MOSFETs (M11, M12, M13, M14, M15, M1a, M1b, M1c), corresponding to the certain phase and first MOSFETs, of the first MOSFETs (M11, M12, M13, M14, M15, M1a, M1b, M1c), corresponding to phases other than the certain phase are turned off.

6. The motor drive device according to claim 1, wherein
the motor (1) is a motor having four or more phases, wherein
the motor drive device includes a first MOSFET of the first MOSFETs (M11, M12, M13, M14, M15, M1a, M1b, M1c) and a second MOSFET of the second MOSFETs (M21, M22, M23, M24, M25, M2a, M2b, M2c) for one coil, of the coils (W1, W2, W3, W4, W5), of each phase, and wherein
when a failure occurs in one phase of the four or more phases, the motor (1) is consecutively operated with all phases other than the failed phase used.

7. The motor drive device according to claim 1, wherein the first MOSFETs (M11, M12, M13, M14, M15, M1a, M1b, M1c) and the second MOSFETs (M21, M22, M23, M24, M25, M2a, M2b, M2c) are independently driven by respective gate drivers (61, 62) .

## Patentansprüche

1. Motoransteuervorrichtung zum Ansteuern einer Vielzahl von Spulen (W1, W2, W3, W4, W5) eines Motors (1), wobei die Motoransteuervorrichtung Folgendes umfasst:
einen Wechselrichter (2, 21), der dazu ausgelegt ist, die Vielzahl von Spulen (W1, W2, W3, W4, W5) anzusteuern, wobei der Wechselrichter (2, 21) vierte MOSFET (M41, M42, M43, M44, M45) auf einer Hochpotentialseite des Wechselrichters und fünfte MOSFET (M51, M52, M53, M54, M55) auf einer Niedrigpotentialseite des Wechselrichters (2, 21) umfasst, wobei die vierten MOSFET (M41, M42, M43, M44, M45) und die fünften MOSFET (M51, M52, M53, M54, M55) durch entsprechende Gate-Treibergruppen (61, 62) angesteuert werden;
eine Sternpunktschalteinheit (3, 31), umfassend einen ersten Sternpunkt (4) und einen zweiten Sternpunkt (5), die sich von dem Wechselrichter (2, 21) unterscheiden und vorab ausgebildet sind, indem sie zur Vielzahl von Spulen (W1, W2, W3, W4, W5) parallel schaltbar sind;
erste MOSFET (M11, M12, M13, M14, M15, M1a, M1b, M1c), die zwischen den ersten Sternpunkt (4) und Spulen (W1, W2, W3, W4, W5) geschaltet sind, wobei die ersten MOSFET (M11, M12, M13, M14, M15, M1a, M1b, M1c) auf einer Spulenseite jeweils eine Kathode einer Body-Diode aufweisen;
zweite MOSFET (M21, M22, M23, M24, M25, M2a, M2b, M2c), die zwischen den zweiten Neutralpunkt (5) und Spulen (W1, W2, W3, W4, W5) geschaltet sind, wobei die zweiten MOSFET (M21, M22, M23, M24, M25, M2a, M2b, M2c) auf einer Spulenseite jeweils eine Anode einer Body-Diode aufweisen; und **gekennzeichnet durch**
dritte MOSFET (M31, M32, M33, M34, M35, M3a, M3b, M3c) zwischen dem Wechselrichter (2, 21) und einer Masse, wobei die dritten MOSFET (M31, M32, M33, M34, M35, M3a, M3b, M3c) auf einer Masseseite jeweils eine Kathode einer Body-Diode aufweisen, die mit entsprechenden Phasenausgängen des Wechselrichters (2, 21) in Serie geschaltet ist, wobei die fünften MOSFET (M51, M52, M53, M54, M55) und die dritten MOSFET (M31, M32, M33, M34, M35, M3a, M3b, M3c) durch dieselbe Gate-Treibergruppe (62) angesteuert werden.

2. Motoransteuervorrichtung nach Anspruch 1, wobei
wenn auf einer Sternpunkt- (4, 5) Seite ein Erdschluss in einer Verdrahtung einer bestimmten Phase des Motors (1) auftritt,
ein zweiter MOSFET aus den zweiten MOSFET (M21, M22, M23, M24, M25, M2a, M2b, M2c), der mit der bestimmten Phase verbunden ist, abgeschaltet wird, ein dritter MOSFET aus den dritten MOSFET (M31, M32, M33, M34, M35, M3a, M3b, M3c), der mit der bestimmten Phase verbunden ist, abgeschaltet wird, und
ein erster MOSFET aus den ersten MOSFET (M11, M12, M13, M14, M15, M1a, M1b, M1c), der mit der bestimmten Phase verbunden ist, und erste MOSFET aus den ersten MOSFET (M11, M12, M13, M14, M15, M1a, M1b, M1c), die mit anderen Phasen als der bestimmten Phase verbunden sind, abgeschaltet werden.

3. Motoransteuervorrichtung nach Anspruch 1, wobei
wenn auf einer Wechselrichter- (2, 21) Seite ein Erdschluss in einer Verdrahtung einer bestimmten Phase des Motors (1) auftritt,
ein zweiter MOSFET aus den zweiten MOSFET (M21, M22, M23, M24, M25, M2a, M2b, M2c), der mit der bestimmten Phase verbunden ist, abgeschaltet wird, und
ein erster MOSFET aus den ersten MOSFET (M11, M12, M13, M14, M15, M1a, M1b, M1c), der mit der bestimmten Phase verbunden ist, und erste MOSFET aus den ersten MOSFET (M11, M12, M13, M14, M15, M1a, M1b, M1c), die mit anderen Phasen als der bestimmten Phase verbunden sind, abgeschaltet werden.

4. Motoransteuervorrichtung nach Anspruch 1, wobei
wenn ein Kurzschluss-Fehler in einer bestimmten Phase eines oberen Zweigs des Wechselrichters (2, 21) auftritt,
ein erster MOSFET aus den ersten MOSFET (M11, M12, M13, M14, M15, M1a, M1b, M1c), die mit der bestimmten Phase verbunden sind, abgeschaltet wird, und
ein zweiter MOSFET aus den zweiten MOSFET (M21, M22, M23, M24, M25, M2a, M2b, M2c), der der bestimmten Phase entspricht, und zweite MOSFET aus den zweiten MOSFET (M21, M22, M23, M24, M25, M2a, M2b, M2c), die anderen Phasen als der bestimmten Phase entsprechen, abgeschaltet werden.

5. Motoransteuervorrichtung nach Anspruch 1, wobei
wenn ein Kurzschlussfehler in einer bestimmten Phase eines unteren Zweigs des Wechselrichters (2, 21) auftritt,
ein zweiter MOSFET aus den zweiten MOSFET (M21, M22, M23, M24, M25, M2a, M2b, M2c), der mit der bestimmten Phase verbunden ist, abgeschaltet wird, und
ein erster MOSFET aus den ersten MOSFET (M11, M12, M13, M14, M15, M1a, M1b, M1c), der der bestimmten Phase entsprechen, und erste MOSFET aus den ersten MOSFET (M11, M12, M13, M14, M15, M1a, M1b, M1c), die anderen Phasen als der bestimmten Phase entsprechen, abgeschaltet werden.

6. Motoransteuervorrichtung nach Anspruch 1, wobei
der Motor (1) ein Motor mit vier oder mehreren Phasen ist, wobei
die Motoransteuervorrichtung einen ersten MOSFET aus den ersten MOSFET (M11, M12, M13, M14, M15, M1a, M1b, M1c) und einen zweiten MOSFET aus den zweiten MOSFET (M21, M22, M23, M24, M25, M2a, M2b, M2c) für eine Spule aus den Spulen (W1, W2, W3, W4, W5) von jeder Phase umfasst, und wobei
wenn in einer Phase aus den vier oder mehreren Phasen ein Fehler eintritt, der Motor (1) nacheinander mit allen Phasen außer der verwendeten fehlerbehafteten Phase betrieben wird.

7. Motoransteuervorrichtung nach Anspruch 1, wobei die ersten MOSFET (M11, M12, M13, M14, M15, M1a, M1b, M1c) und die zweiten MOSFET (M21, M22, M23, M24, M25, M2a, M2b, M2c) durch entsprechende Gate-Treiber (61, 62) unabhängig angesteuert werden.

## Revendications

1. Dispositif d'entraînement de moteur pour entraîner une pluralité de bobines (W1, W2, W3, W4, W5) d'un moteur (1), le dispositif d'entraînement de moteur comprenant :
un onduleur (2, 21) configuré pour commander la pluralité de bobines (W1, W2, W3, W4, W5), l'onduleur (2, 21) comprenant des quatrièmes MOSFET (M41, M42, M43, M44, M45) sur un côté de potentiel élevé de l'onduleur et des cinquièmes MOSFET (M51, M52, M53, M54, M55) sur un côté de potentiel bas de l'onduleur (2, 21), les quatrièmes MOSFET (M41, M42, M43, M44, M45) et les cinquièmes MOSFET (M51, M52, M53, M54, M55) étant entraînés par des groupes de pilotes de grille respectifs (61, 62) ;
une unité de commutation de point neutre (3, 31) comprenant un premier point neutre (4) et un second point neutre (5) qui sont différents de l'onduleur (2, 21) et sont formés à l'avance en pouvant être connectés en parallèle à la pluralité de bobines (W1, W2, W3, W4, W5) ;
des premiers MOSFET (M11, M12, M13, M14, M15, M1a, M1b, M1c) connectés entre le premier point neutre (4) et les bobines (W1, W2, W3, W4, W5), les premiers MOSFET (M11, M12, M13, M14, M15, M1a, M1b, M1c) présentant chacun une cathode, d'une diode de corps, sur un côté de bobine ;
des deuxièmes MOSFET (M21, M22, M23, M24, M25, M2a, M2b, M2c) connectés entre le second point neutre (5) et les bobines (W1, W2, W3, W4, W5), les deuxièmes MOSFET (M21, M22, M23, M24, M25, M2a, M2b, M2c) présentant chacun une anode, d'une diode de corps, sur un côté de bobine ; et **caractérisé par**
des troisièmes MOSFET (M31, M32, M33, M34, M35, M3a, M3b, M3c) entre l'onduleur (2, 21) et une masse, les troisièmes MOSFET (M31, M32, M33, M34, M35, M3a, M3b, M3c) présentant chacun une cathode, d'une diode de corps, sur un côté de masse connectée en série avec des sorties de phase respectives de l'onduleur (2, 21), dans lequel les cinquièmes MOSFET (M51, M52, M53, M54, M55) et les troisièmes MOSFET (M31, M32, M33, M34, M35, M3a, M3b, M3c) sont commandés par le même groupe de pilotes de grille (62).

2. Dispositif d'entraînement de moteur selon la revendication 1, dans lequel
lorsqu'un défaut de masse se produit dans un câblage, d'une certaine phase du moteur (1), du côté d'un point neutre (4, 5),
un deuxième MOSFET, des deuxièmes MOSFET (M21, M22, M23, M24, M25, M2a, M2b, M2c), connecté à la certaine phase est désactivé, un troisième MOSFET, des troisièmes MOSFET (M31, M32, M33, M34, M35, M3a, M3b, M3c), connecté à la certaine phase est désactivé, et un premier MOSFET, des premiers MOSFET (M11, M12, M13, M14, M15, M1a, M1b, M1c), connecté à la certaine phase et
des premiers MOSFET, des premiers MOSFET (M11, M12, M13, M14, M15, M1a, M1b, M1c), connectés à des phases autres que la certaine phase sont désactivés.

3. Dispositif d'entraînement de moteur selon la revendication 1, dans lequel
lorsqu'un défaut de masse se produit dans un câblage, d'une certaine phase du moteur (1), du côté de l'onduleur (2, 21),
un deuxième MOSFET, des deuxièmes MOSFET (M21, M22, M23, M24, M25, M2a, M2b, M2c), connecté à la certaine phase est désactivé, et
un premier MOSFET, des premiers MOSFET (M11, M12, M13, M14, M15, M1a, M1b, M1c), connecté à la certaine phase et des premiers MOSFET, des premiers MOSFET (M11, M12, M13, M14, M15, M1a, M1b, M1c), connectés à des phases autres que la certaine phase sont désactivés.

4. Dispositif d'entraînement de moteur selon la revendication 1, dans lequel
lorsqu'une défaillance de court-circuit se produit dans une certaine phase d'un bras supérieur de l'onduleur (2, 21),
un premier MOSFET, des premiers MOSFET (M11, M12, M13, M14, M15, M1a, M1b, M1c), connecté à la certaine phase est désactivé, et
un deuxième MOSFET, des deuxièmes MOSFET (M21, M22, M23, M24, M25, M2a, M2b, M2c), correspondant à la certaine phase et des deuxièmes MOSFET, des deuxièmes MOSFET (M21, M22, M23, M24, M25, M2a, M2b, M2c), correspondant à des phases autres que la certaine phase sont désactivés.

5. Dispositif d'entraînement de moteur selon la revendication 1, dans lequel
lorsqu'une défaillance de court-circuit se produit dans une certaine phase d'un bras inférieur de l'onduleur (2, 21),
un deuxième MOSFET, des deuxièmes MOSFET (M21, M22, M23, M24, M25, M2a, M2b, M2c), connecté à la certaine phase est désactivé, et
un premier MOSFET, des premiers MOSFET (M11, M12, M13, M14, M15, M1a, M1b, M1c), correspondant à la certaine phase et des premiers MOSFET, des premiers MOSFET (M11, M12, M13, M14, M15, M1a, M1b, M1c), correspondant à des phases autres que la certaine phase sont désactivés.

6. Dispositif d'entraînement de moteur selon la revendication 1, dans lequel
le moteur (1) est un moteur présentant quatre phases ou plus, dans lequel
le dispositif d'entraînement de moteur inclut un premier MOSFET des premiers MOSFET (M11, M12, M13, M14, M15, M1a, M1b, M1c) et un deuxième MOSFET des deuxièmes MOSFET (M21, M22, M23, M24, M25, M2a, M2b, M2c) pour une certaine bobine, parmi les bobines (W1, W2, W3, W4, W5), de chaque phase, et dans lequel
lorsqu'une défaillance se produit dans une certaine phase des quatre phases ou plus, le moteur (1) fonctionne consécutivement avec toutes les phases autres que la phase défaillante utilisée.

7. Dispositif d'entraînement de moteur selon la revendication 1, dans lequel les premiers MOSFET (M11, M12, M13, M14, M15, M1a, M1b, M1c) et les deuxièmes MOSFET (M21, M22, M23, M24, M25, M2a, M2b, M2c) sont entraînés indépendamment par des pilotes de grille respectifs (61, 62).
